Europäisches Patentamt

European Patent Office

Office européen des brevets

(19)

(11) Veröffentlichungsnummer: **0 247 024**
**B1**

(12) **EUROPÄISCHE PATENTSCHRIFT**

(45) Veröffentlichungstag der Patentschrift:
26.07.89

(21) Anmeldenummer: **87890094.3**

(22) Anmeldetag: **12.05.87**

(51) Int. Cl.⁴: **B65G 47/04**, B65G 49/08

(54) Vorrichtung zum sanften Absetzen von Einzelstücken, insbesondere Steine auf eine Unterlage.

(30) Priorität: **20.05.86 AT 1325/86**

(43) Veröffentlichungstag der Anmeldung:
**25.11.87 Patentblatt 87/48**

(45) Bekanntmachung des Hinweises auf die Patenterteilung:
**26.07.89 Patentblatt 89/30**

(84) Benannte Vertragsstaaten:
**BE CH DE FR GB IT LI SE**

(56) Entgegenhaltungen:
**DE-A- 3 502 586**

(73) Patentinhaber: **SIMMERING-GRAZ-PAUKER AKTIENGESELLSCHAFT, Brehmstrasse 16, A-1110 Wien(AT)**

(72) Erfinder: **Ribar, Norbert, Ing., Jägerstrasse 62-64/6/12, A-1200 Wien(AT)**
Erfinder: **Selner, Herbert, Albrechtsgasse 6, A-2500 Baden(AT)**

(74) Vertreter: **Köhler-Pavlik, Johann, Dipl.-Ing., Margaretenplatz 5, A-1050 Wien(AT)**

## Beschreibung

Die Erfindung betrifft eine Vorrichtung zum sanften Absetzen eines bei einer Absetzstelle gehaltenen Einzelstückes, insbesondere Steins, auf ein Förderband, unter dessen Obergurt Gleitplatten angeordnet sind.

Das Produkt einer automatischen Produktionsmaschine, z.B. feuerfeste Steine einer Steinpresse, soll von dieser mittels eines Greifers auf ein von dieser Maschine wegführendes Förderband ("Pufferband") abgesetzt werden. Der Greifer nimmt den Stein vom Preßstempel und führt ihn in waagrechter Richtung zum Förderband, öffnet und setzt den Stein am Förderband ab. Hierbei besteht das Problem, daß das die Oberfläche des Förderbandes und die Oberfläche des Preßstempels sich nicht auf gleichem Niveau befinden, d.h. die Unterseite des Steines kann 1 bis 5 mm höher liegen als das Förderband, wodurch der Stein beim Öffnen des Greifers auf das Förderband fällt. Trotz der geringen Fallhöhen von 1 bis 5 mm kann es dabei zu Deformationen des Steines kommen, welche die Maßgenauigkeit des Steins beeinträchtigen.

Aufgabe der Erfindung ist die Schaffung einer Vorrichtung zur Beseitigung dieses Nachteils.

Diese Aufgabe wird dadurch gelöst, daß bei einer Vorrichtung der eingangs genannten Art erfindungsgemäß zumindest eine der Gleitplatten bei der Absetzstelle höhenverstellbar angeordnet ist.

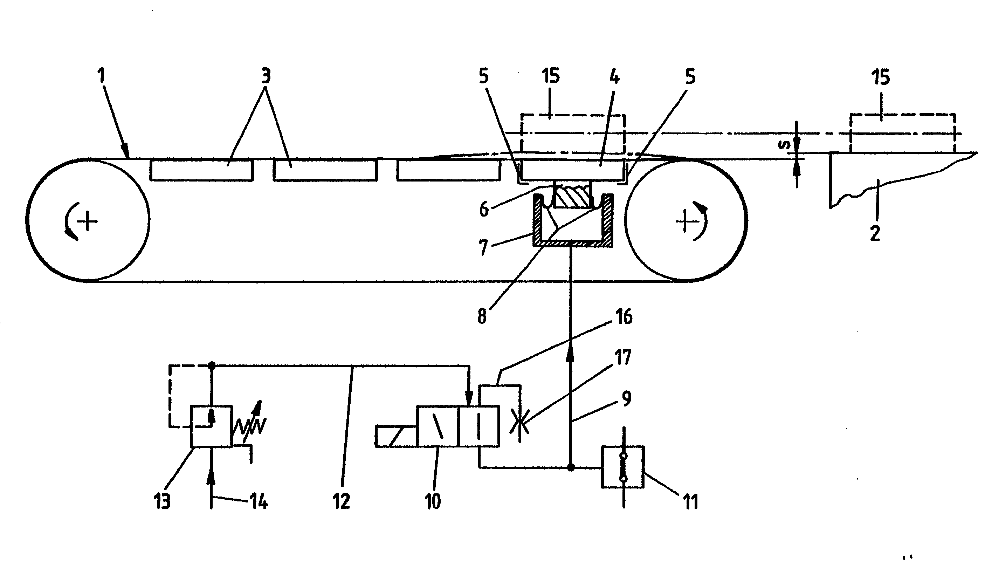

Weitere Merkmale und Einzelheiten der Erfindung werden nachfolgend anhand der Figur erläutert, die ein Ausführungsbeispiel der Erfindung in schematischer Darstellung zeigt.

In der Figur bezeichnet 1 ein Förderband, welches als Pufferband zwischen einer Steinpresse, deren Preßstempel mit 2 bezeichnet ist, und z.B. einer Palettiervorrichtung (nicht dargestellt) dient. Unter dem Obergurt des Förderbandes 1 sind drei Gleitplatten 3 starr und bei der Absetzstelle eine Gleitplatte 4 höhenverstellbar angeordnet. Zur Höhenverstellung der Gleitplatte 4 ist diese in seitlichen L-förmigen Führungsleisten 5 gleitend gelagert und mit einem nach unten ragenden Stempel 6 versehen, der in eine vorzugsweise zylindrische Kammer 7 eintaucht und mit deren Rändern über einen elastischen Balg 8, z.B. Gummibalg, allseitig dichtend verbunden ist. Im Boden der Kammer 7 mündet eine Druckluftleitung 9 ein, die mit einem elektromagnetisch betätigbaren Zweiwegventil 10 und einem Druckschalter 11 verbunden ist. Das Zweiwegventil 10 ist über eine Leitung 12 mit einem Druck-minderventil 13 verbunden, das seinerseits über eine Leitung 14 mit einem Druckluftsysem (nicht dargestellt) verbunden ist, dessen Druck z.B. 6 bis 10 bar beträgt. Am Ausgang des Zweiwegventils kann ein Drosselventil 17 angeordnet sein.

Wie aus der Figur ersichtlich ist, tritt eine Niveaudifferenz s zwischen Förderband 1 und Stempel 2 auf, d.h. die Oberfläche des Förderbandes 1 liegt tiefer als die des Preßstempels 2. Über einen nicht dargestellten Greifer wird der Stein 15 ergriffen und in waagrechter Richtung (strichpunktierte Linie) bis zur Position der Gleitplatte 4 gebracht.

Falls das Förderband 1 in Bewegung ist, wird es angehalten und das Zweiwegventil 10 betätigt, sodaß Druckluft in die Kammer 7 mit einem vorbestimmten Druck einströmt, der in Abhängigkeit vom Gewicht des Steins 15 über das Druckminderventil 13 eingestellt wird. Durch den sich in der Kammer 7 aufbauenden Überdruck wird der Stempel 6 und damit die Gleitplatte 4 samt Förderband 1 um die Niveaudifferenz s angehoben, bis das Förderband 1 (strichpunktierte Linie) an der Unterseite des Steins 15 anliegt und einen leichten Druck auf den Stein 15 ausübt. Der Ansprechwert des Druckschalters 11 ist so eingestellt, daß der Druckschalter 11 gerade zu diesem Zeitpunkt anspricht und ein Signal zum Öffnen des Greifers gibt, sodaß nun das volle Gewicht des Steins 15 auf der Gleitplatte 4 lastet. Anschließend wird das Förderband 1 in Betrieb gesetzt und das Zweiwegventil 10 ausgeschaltet, sodaß die Druckluft über die Leitung 16 entweicht, wodurch der Stempel 6 und damit die Gleitplatte 4 samt Förderband 1 nach unten in die Ausgangslage zurückkehren. Durch das Drosselventil 17 wird der Druckabfall beim Öffnen des Zweiwegventils 10 verzögert, sodaß die Gleitplatte 4 langsam nach unten geht.

Anstelle des Druckschalters 11 kann auch ein Zeitrelais verwendet werden, das mit dem Öffnen des Zweiwegventils 10 anspricht und nach einer einstellbaren Zeitdauer ein Signal zum Öffnen des Greifers abgibt.

Es versteht sich, daß zur Höhenverstellung der Gleitplatte 4 auch hydraulisch oder pneumatisch betätigte Zylinder od.dgl. verwendet werden können.

## Patentansprüche

1. Vorrichtung zum sanften Absetzen eines bei einer Absetzstelle gehaltenen Einzelstückes, insbesondere Steines, auf ein Förderband, unter dessen Obergurt Gleitplatten angeordnet sind, dadurch gekennzeichnet, daß zumindest eine der Gleitplatten (4) bei der Absetzstelle höhenverstellbar angeordnet ist.

2. Vorrichtung nach Anspruch 1, dadurch gekennzeichnet, daß die höhenverstellbare Gleitplatte (4) in seitlichen Führungsleisten (5) gleitend gelagert und mit einem nach unten ragenden Stempel (6) versehen ist, der in eine zylindrische Kammer (7) eintaucht und mit deren Rändern über einen elastischen Balg (8) allseitig dichtend verbunden ist, wobei in den Boden der Kammer (7) eine Leitung (9) zur Zufuhr eines flüssigen oder gasförmigen Mediums einmündet.

3. Vorrichtung nach Anspruch 2, dadurch gekennzeichnet, daß die Leitung (9) mit einem Zweiwegventil (10) und einem Druckschalter (11) verbunden ist, wobei das Zweiwegventil (10) über eine Leitung (12) mit einem Druckminderventil (13) verbunden ist, das seinerseits über eine Leitung (14) mit einem Druckluftsystem verbunden ist.

4. Vorrichtung nach Anspruch 3, dadurch gekennzeichnet, daß in der Ausgangsleitung (16) des Zweiwegventils (10) ein Drosselventil (17) angeordnet ist.

## Claims

1. A device for gently transferring a single object held of a transfer point, in particular a brick, onto a conveyor belt under the upper side of which sliding plates are disposed, characterised in that at least one of the sliding plates (4) of the transfer point is disposed so as to be adjustable vertically.

2. A device as claim 1, characterised in that the vertically adjustable sliding plate (4) is mounted so that if can slide in lateral guides (5) and provided with a downward projecting piston (6) which engages in a cylindrical chamber (7) and is joined at its edges by means of an elastic bellows (8) forming a seal on all sides, and a line (9) to supply a liquid or gaseous medium debouches in the bottom of the chamber (7).

3. A device as in claim 2, characterised in that the line (9) is connected to a two-way valve (10) and a pressure switch (11) and the two-way valve (10) is connected via a line (12) to a pressure reducing valve (13) which is in turn connected via a line (14) to a compressed air system.

4. A device as in claim 3, characterised in that a choke valve (17) is disposed in the outlet line (16) of the two-way valve (10).

## Revendications

1. Dispositif pour le dépôt en douceur d'une pièce isolée maintenue à un emplacement de dépôt, notamment d'une pierre, sur une bande de transport, sous le brin supérieur de laquelle sont disposées des plaques de glissement, caractérisé en ce qu'au moins l'une des plaques de glissement (4) a une hauteur réglable à l'emplacement de dépôt.

2. Dispositif selon la revendication 1, caractérisé en ce que la plaque de glissement (4) dont la hauteur est réglable, repose de façon glissante entre des barres conductrices latérales (5) et est pourvue d'un piston (6) orienté vers le bas, qui plonge dans une chambre cylindrique (7) et en ce qu'elle est reliée de tous côtés de façon isolante, par un soufflet élastique (8) aux bords de la chambre; une conduite (9) pour l'amenée d'un milieu liquide ou gazeux arrivant au fond de la chambre (7).

3. Dispositif selon la revendication 2, caractérisé en ce que la conduite (9) est reliée à un distributeur double (10) et un interrupteur manométrique (11), le distributeur double (10) étant relié par une conduite (12) à un clapet détendeur (13), relié lui-même par une conduite (14) à un système d'air comprimé.

4. Dispositif selon la revendication 3, caractérisé en ce qu'une soupape de réglage (17) est reliée à la conduite de sortie (16) du distributeur double (10).